# EUROPÄISCHE PATENTSCHRIFT

(11) **EP 1 760 421 B1**
(45) Veröffentlichungstag und Bekanntmachung des Hinweises auf die Patenterteilung: **06.04.2011**
(21) Anmeldenummer: 06018080.9
(22) Anmeldetag: 30.08.2006
(51) Int. Cl.: G01B 5/255, B62D 1/04, G01M 17/06

(54) **Lenkradwaage**
Steering wheel balance
Balance de volant

(30) Priorität: 06.09.2005 DE 102005042446
(43) Veröffentlichungstag der Anmeldung: 07.03.2007
(73) Patentinhaber: Dürr Assembly Products GmbH, 66346 Püttlingen (DE)
(72) Erfinder: Tentrup, Thomas, Dr., 66663 Mechem (DE); Weisgerber, Rainer, 66793 Saarwellingen (DE); Deutsch, André, 67260 Herbitzheim (DE); Kurt, Ismail, 66333 Völklingen (DE)
(74) Vertreter: Vièl, Christof

(56) Entgegenhaltungen:
- DE-A1- 10 356 290
- DE-U1- 29 906 813
- US-A- 4 393 694
- US-A- 4 893 413

## Beschreibung

Die Erfindung betrifft eine Lenkradwaagc zur Messung der Ausrichtung des Lenkrades eines Kraftfahrzeuges bezüglich der Horizontalen, mit Mitteln zur lösbaren Befestigung der Lenkradwaage am Lenkrad in seiner Symmetrielage sowie mit einer variabel einstellbaren Abstützvorrichtung zur Fixierung der Lenkradwaage an der Karosserie des Fahrzeuges, mit einem Inklinometer zur Erfassung der Abweichung von der Horizontalen und einer Auswerte- und einer Anzeigevorrichtung. Sie betrifft weiterhin ein Verfahren zur Einstellung der Einzelspurwinkel der Vorderachse eines Kraftfahrzeuges in der Weise, dass bei Geradeausfahrt des Kraftfahrzeuges das Lenkrad in Bezug zu seiner Symmetrielage horizontal ausgerichtet ist.

Derartige Lenkradwaagen zur Messung der Lenkradausrichtung zur Horizontalen sind beispielsweise aus der DE 299 06 813 U1, aus der DE 103 56 290 A1 und aus der US 4,893,413 A bekannt. Sie werden sowohl bei der Fahrwerkgeometrieeinstellung, speziell bei der Einzelspureinstellung der Vorderachse, verwendet als auch zum Nachmessen der Ausrichtung des Lenkrades zur Horizontalen bei Geradeausfahrt.

Auf einen Fahrwerkgeometrieeinstellstand wird die Lenkradwaage zunächst in das Lenkrad des KFZ manuell eingelegt und dann das Lenkrad in einem vorgegebenen Toleranzfenster (typischerweise +/- 3° zur Horizontalen) arretiert. Die Arretierung erfolgt durch eine variabel einstellbare und ausfahrbare Abstützvorrichtung, mit der die Lenkradwaage an der Karosse des Fahrzeuges, beispielsweise an der Windschutzscheibe, fixiert wird. Dies ist notwendig, um eine Verdrehung des Lenkrades bei der Einstellung der Einzelspurwerte zu verhindern.

Aus der US 4,393,694 A1 ist eine Lenkradwaage bekannt, bei der zusätzlich zur Messung der Abweichung des Lenkrades von der Horizontalen noch Kräfte und Drehmomente gemessen werden. Verspannungen zwischen der fixierten Lenkradwaage und dem Lenkrad bei der Einstellung der Einzelspurwerte können hiermit jedoch nicht berücksichtigt werden.

Aufgabe der Erfindung ist es somit, eine gegenüber dem Stand der Technik verbesserte Lcnkradwaage zu schaffen, die insbesondere Verspannungen zwischen fixierter Lenkradwaage und Lenkrad bei der Einstellung der Einzelspurwerte Rechnung trägt.

Diese Aufgabe wird erfindungsgemäß dadurch gelöst, daß im Bereich der Mittel zur lösbaren Befestigung der Lenkradwaage am Lenkrad Mittel zum Messen von Kräften oder Drehmomenten zwischen der Lenkradwaage und dem Lenkrad vorgesehen sind.

Es liegt also eine Lenkradwaage vor, die einerseits die Ausrichtung in Bezug auf die Horizontale eines Lenkrades eines Kraftfahrzeuges und andererseits die Kräfte zwischen Lenkradwaage und Lenkrad mißt.

Die Erfindung beruht auf der Erkenntnis, daß Kräfte auf die Spurstangen der Vorderachse, welche typischerweise bei der Einstellung der Einzelspurwerte aufgebracht werden, über das Lenkgetriebe zurück auf das Lenkrad als Drehmoment wirken. Diese Krafteinleitung, die zu einer Verspannung zwischen fixierter Lenkradwaage und Lenkrad führt, wurde bei bekannten Lenkradwaagen nicht angezeigt. Auf Grund des Lenkradspiels bzw. der Lenkradelastizität führen diese Verspannungen dazu, dass bei der Einstellung der Einzelspurwinkel sich das Lenkrad nicht in der Mitte des Lenkradspiels bzw. der Lenkradelastizität befindet und das Kraftfahrzeug im normalen Fahrbetrieb bei der Geradeausfahrt ein schief stehendes Lenkrad zeigt. Bei der erfindungsgemäßen Lenkradwaage können durch die Fahrwerkeinstellung über das Lenkgetriebe eingeleitete Kräfte hingegen angezeigt und die Verspannung durch Lösen der Arretierung an der Karosse aufgelöst werden. Danach wird die Arretierung der Lenkradwaage an der Karosse wieder aktiviert und die Einzelspureinstellung an der Vorderachse im spannungsfreien Zustand fortgesetzt.

Eine Ausbildung der Erfindung besteht darin, daß die Mittel zum Bestimmen der auf die Mittel zur lösbaren Befestigung der Lenkradwaage am Lenkrad einwirkenden Kräfte kraftsensitive Elemente sind.

Weiterhin ist vorgesehen, daß Mittel zum Bestimmen des auf das Lenkrad einwirkenden Drehmomentes vorgesehen sind.

Die bei der Fahrwerkgcometrieeinstellung eingeleiteten Kräfte üben auf das Lenkrad ein Drehmoment aus. Zu dessen Erfassung ist es möglich, daß als Mittel zum Bestimmen des auf das Lenkrad einwirkenden Drehmomentes eine Auswerteeinheit auf der an der Karosse fixierten Lenkradwaage vorgesehen ist, mit der aus der Position der Mittel zum Bestimmen der auf die Mittel zur lösbaren Befestigung der Lenkradwaage am Lenkrad einwirkenden Kräfte und den ermittelten Kräften das auf das Lenkrad einwirkende Drehmoment bestimmbar ist.

Bei einer alternativen Ausführungsform ist vorgesehen, daß die Mittel zum Bestimmen der auf die Mittel zur lösbaren Befestigung der Lenkradwaage am Lenkrad einwirkenden Kräfte drehmomentsensitive Elemente sind.

Weiterhin ist es zweckmäßig, daß Mittel zum Anzeigen des auf das Lenkrad einwirkenden Drehmomentes vorgesehen sind.

Ebenso ist zur Erfindung gehörig, daß an der Abstützvorrichtung zur Festlegung der Lenkradwaage an der Karosse des Fahrzeuges Mittel zum Abgleich zwischen dem Ist-Wert und einem Soll-Wert des auf das Lenkrad wirkenden Drehmomentes vorgesehen sind.

Im Rahmen der Erfindung liegt auch ein Verfahren zur Einstellung der Einzelspurwinkel der Vorderachse eines Kraftfahrzeuges mit dem Ziel, daß das Lenkrad bei Geradeausfahrt in Bezug zu seiner Symmetrielage eine horizontale Ausrichtung zeigt, wobei eine Lcnkradwaage verwendet wird mit im Bereich der Mittel zur lösbaren Befestigung der Lenkradwaage am Lenkrad angeordneten Mitteln zum Messen der Kräfte bzw. Drehmomente zwischen der Lenkradwaage und dem Lenkrad, mit einer variabel einstellbaren Abstütz- und Fixiervorrichtung zur Festlegung der Lenkradwaage an der Karosse des Fahrzeuges, mit einem Inklinometer, das die Abweichung zur Horizontalen mißt und wobei diese Abweichung über das Lenkradübersetzungsverhältnis so mit den Einzelspurwinkeln der Vorderachse verrechnet wird, daß diese in Bezug auf eine horizontale Lage des Lenkrades ausgegeben werden und wobei die Einzelspurwinkel der Vorderachse nach der Fixierung der Lenkradwaage für die Einstellung in Bezug zu Sollwerten ausgegeben werden und die Einstellung der Einzelspurwinkel in Bezug auf die horizontale Lage des Lenkrads nur dann durchgeführt wird, wenn das Drehmoment zwischen der an der Karosse fixierten Lenkradwaage und dem Lenkrad einen bestimmten Toleranzwert nicht überschreitet.

Dieses Verfahren unterscheidet sich vom Stand der Technik insbesondere dadurch, daß die Einstellung der Einzelspurwinkcl der Vorderachse unter Berücksichtigung des Lenkradspiels bzw. der Lenkradelastizität erfolgt.

Es ist vorgesehen, daß bei Überschreitung des Toleranzwertes die Abstütz- und Fixicreinrichtung zur Festlegung der Lenkradwaage an der Karosse gelöst wird, ein spannungsfreier Zustand wiederhergestellt wird und nachfolgend zur weiteren Einstellung die Lenkradwaage durch die Abstütz- und Fixiereinrichtung wieder an der Karosse festgelegt wird.

Weiterhin ist es sinnvoll, daß die auf die Mittel zur lösbaren Befestigung der Lenkradwaage am Lenkrad einwirkenden Kräfte und/oder die jeweils erforderliche Korrektur der Ausrichtung des Lenkrades auf Mitteln zum Anzeigen visualisiert werden.

Schließlich kann auch vorgesehen sein, daß die auf die Mittel zur lösbaren Befestigung der Lenkradwaage am Lenkrad einwirkenden Kräfte und/oder die jeweils erforderliche Korrektur der Ausrichtung des Lenkrades an andere Systeme übertragen werden.

Nachfolgend wird ein Ausführungsbeispiel der Erfindung anhand von Zeichnungen beschrieben.

Es zeigen
- Fig. 1: eine räumliche Darstellung einer erfindungsgemäßen Lenkradwaage,
- Fig. 2: eine Seitenansicht der Lenkradwaage gemäß Fig. 1,

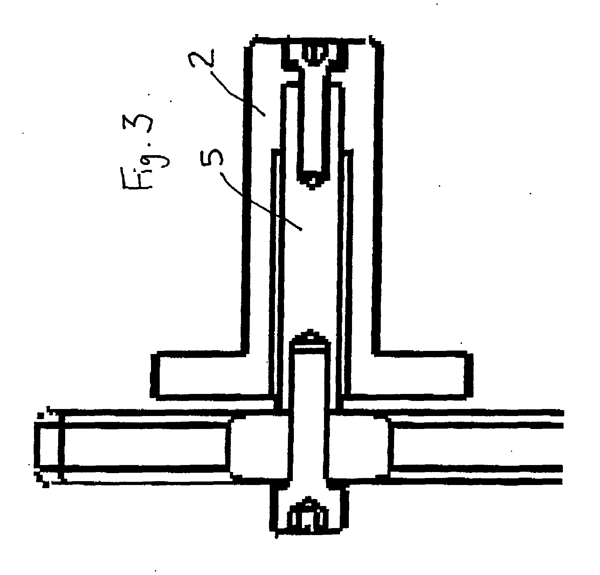

- Fig. 3: eine Detailansicht der Lenkradwaage gemäß Fig. 1 bzw. Fig. 2.

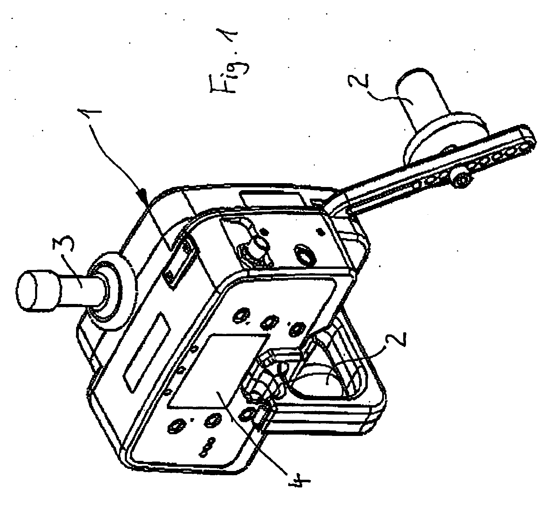

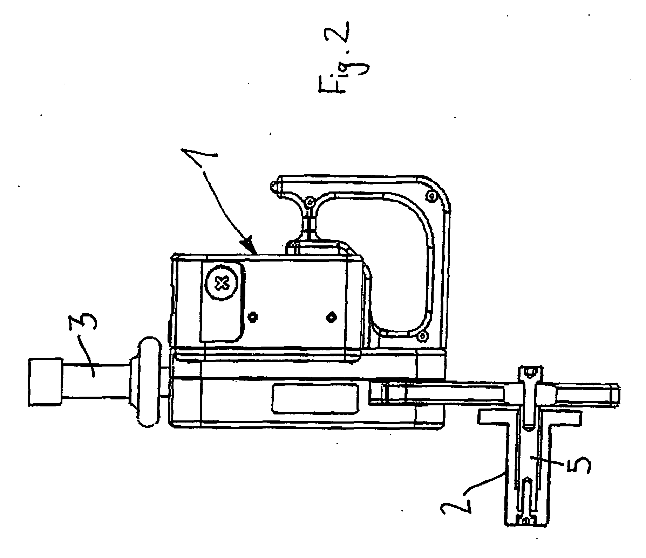

Die in den Fig. 1 und 2 dargestellte Lenkradwaage 1 weist Mittel 2 zur lösbaren Befestigung der Lenkradwaage am Lenkrad in seiner jeweiligen Symmetrielage auf, die auch als "Füße" bezeichnet werden. Über diese kann die Lenkradwaage 1 mechanisch am Lenkrad adaptiert werden, so daß diese eine Einheit bilden.

Weiterhin ist die Lenkradwaage 1 mit einer variabel einstellbaren Abstützvorrichtung 3 zur Festlegung der Lenkradwaage an der Karosse des Fahrzeuges versehen, die z.B. die Lenkradwaage an der Windschutzscheibe abstützt.

Darüber hinaus weist die Lenkradwaage 1 ein Inklinometer zur Messung der Abweichung von der Horizontalen, einen µ-Controller zur Meßwertaufnahme und -verarbeitung sowie eine als Display ausgebildete Anzeigevorrichtung 4 zur Anzeige von Graphiken und/oder Texten auf. Neben der Anzeigevorrichtung 4 können weitere Bauelemente zur akustischen und/oder optischen Signalisierung von Zuständen vorgesehen sein. Dies ermöglicht es, neben den ermittelten Meßwerten Werkeranweisungen zum korrekten Handling der Lenkradwaage 1 beim manuellen Auflegen auf das Lenkrad und während des Fahrwerkeinstellvorganges auszugeben.

Die Lenkradwaage weist in der Regel weiterhin eine Schnittstelle zur Datenübertragung zu einem anderen System, z.B. zu einem übergeordneten Fahrzeugeinstellstand, auf.

Mit der Lenkradwaage 1 werden der Lenkeinschlagwinkel in Bezug zur Horizontalen und die auf das Lenkrad wirkenden Kräfte sowie die aus den Kräften resultierenden Drehmomente bestimmt. Diese Meßwerte werden anhand vorgegebener Toleranzangaben bewertet und neben der oben dargestellten Visualisierung auch an andere Systeme übertragen.

Um den während des Fahrwerkeinstellvorganges über das Lenkgetriebe auf das Lenkrad in Form eines Drehmomentes einwirkenden Kräften Rechnung zu tragen, sind im Bereich der Mittel 2 zur lösbaren Befestigung der Lenkradwaage am Lenkrad Mittel 5 zum Bestimmen der auf die Mittel 2 zur lösbaren Befestigung der Lenkradwaagc 1 am Lenkrad einwirkenden Kräfte vorgesehen, welche als kraftsensitive Elemente ausgebildet sein können, die an den Füßen 2 der Lenkradwaage 1. angeordnet sind.

Zum Bestimmen des auf das Lenkrad einwirkenden Drehmomentes ist eine Auswerteeinheit vorgesehen, mit der aus der Position der Mittel 5 zum Bestimmen der auf die Mittel 2 zur lösbaren Befestigung der Lenkradwaage 1 am Lenkrad einwirkenden Kräfte und den ermittelten Kräften das auf das Lenkrad einwirkende Drehmoment bestimmbar ist.

Alternativ zu den oben beschriebenen kraftsensitiven Mitteln und der Auswertung kann auch vorgesehen sein, daß die Mittel 5 zum Bestimmen der auf die Mittel zur lösbaren Befestigung der Lenkradwaage am Lenkrad einwirkenden Kräfte drehmomentsensitive Elemente sind, die an den Füßen 2 der Lenkradwaage 1 angeordnet sind.

Weiterhin ist vorgesehen, daß Mittel 4 zum Anzeigen des auf das Lenkrad einwirkenden Drehmomentes vorgesehen sind. Hierzu kann die oben beschriebene Anzcigevorrichtung 4 verwendet werden.

Das ermittelte Drehmoment wird zweckmäßigerweise an die Auswerteeinheit weitergeleitet, die dieses bei der Einstellung der Einspurwinkel der Vorderachse berücksichtigen kann.

Darüber hinaus kann auch ein Mittel an der Abstütz- und Fixiervorrichtung an der Karosse zum Abgleich zwischen dem Ist-Wert und einem Soll-Wert des auf das Lenkrad wirkenden Drehmomentes vorgesehen sein, mit der das auf das Lenkrad einwirkende Drehmoment idealer weise auf den Wert Null reduziert wird.

## Patentansprüche

1. Lenkradwaage zur Messung der Abweichung des Lenkrades von der Horizontalen, mit Mitteln zur lösbaren Befestigung der Lenkradwaage am Lenkrad in seiner Symmetrielage sowie mit einer variabel einstellbaren Abstützvorrichtung zur Festlegung der Lenkradwaage an der Karosse des Fahrzeuges mit einem Inklinometer zur Erfassung der Neigung gegenüber der Horizontalen, einer Auswerte- und einer Anzeigevorrichtung, **dadurch gekennzeichnet, daß** im Bereich der Mittel (2) zur lösbaren Befestigung der Lenkradwaage (1) am Lenkrad Mittel (5) zum Messen von Kräften oder Drehmomenten zwischen der Lenkradwaage (1) und dem Lenkrad vorgesehen sind.

2. Lenkradwaage gemäß Anspruch 1, **dadurch gekennzeichnet, daß** die Mittel (5) zum Bestimmen der auf die Mittel (2) zur lösbaren Befestigung der Lenkradwaage (1) am Lenkrad einwirkenden Kräfte kraftsensitive Elemente (5) sind.

3. Lenkradwaage gemäß Anspruch 1 oder Anspruch 2, **dadurch gekennzeichnet, daß** Mittel zum Bestimmen des auf das Lenkrad einwirkenden Drehmomentes vorgesehen sind.

4. Lenkradwaage gemäß Anspruch 3, **dadurch gekennzeichnet, daß** als Mittel zum Bestimmen des auf das Lenkrad einwirkenden Drehmomentes eine Auswerteeinheit vorgesehen ist, mit der aus der Position der Mittel (5) zum Bestimmen der auf die Mittel zur lösbaren Befestigung der Lenkradwaage (1) am Lenkrad einwirkenden Kräfte und den ermittelten Kräften das auf das Lenkrad einwirkende Drehmoment bestimmbar ist.

5. Lenkradwaage gemäß Anspruch 1, **dadurch gekennzeichnet, daß** die Mittel (5) zum Bestimmen der auf die Mittel (2) zur lösbaren Befestigung der Lenkradwaage (1) am Lenkrad einwirkenden Kräfte drehmomentsensitive Elemente sind.

6. Lenkradwaage gemäß Anspruch 3, **dadurch gekennzeichnet, daß** Mittel (4) zum Anzeigen des auf das Lenkrad einwirkenden Drehmomentes vorgesehen sind.

7. Lenkradwaage gemäß Anspruch 3, **dadurch gekennzeichnet, dass** an der Abstützvorrichtung zur Festlegung der Lenkradwaage an der Karosse des Fahrzeuges Mittel zum Abgleich zwischen dem Ist-Wert und einem Soll-Wert des auf das Lenkrad wirkenden Drehmomentes vorgesehen sind.

8. Verfahren zur Einstellung der Einzelspurwinkel der Vorderachse eines Kraftfahrzeuges mit dem Ziel, daß das Lenkrad bei Geradeausfahrt in Bezug zu seiner Symmetrielage eine horizontale Ausrichtung zeigt, wobei eine Lenkradwaage verwendet wird mit im Bereich der Mittel zur lösbaren Befestigung der Lenkradwaage am Lenkrad angeordneten Mitteln zum Messen der Kräfte bzw. Drehmomente zwischen der Lenkradwaage und dem Lenkrad, mit einer variabel einstellbaren Abstütz- und Fixiervorrichtung zur Festlegung der Lenkradwaage an der Karosse des Fahrzeuges, mit einem Inklinometer, das die Abweichung zur Horizontalen misst und wobei diese Abweichung über das Lenkradübersetzungsverhältnis so mit den Einzelspurwinkeln der Vorderachse verrechnet wird, dass diese in Bezug auf eine horizontale Lage des Lenkrades ausgegeben werden und wobei die Einzelspurwinkel der Vorderachse nach der Fixierung der Lenkradwaage für die Einstellung in Bezug zu Sollwerten ausgegeben werden und die Einstellung der Einzelspurwinkel in Bezug auf die horizontale Lage des Lenkrads nur dann durchgeführt wird, wenn das Drehmoment zwischen der an der Karosse fixierten Lenkradwaage und dem Lenkrad einen bestimmten Toleranzwert nicht überschreitet.

9. Verfahren gemäß Anspruch 8, **dadurch gekennzeichnet, daß** bei Überschreitung des Toleranzwertes die Abstütz- und Fixiereinrichtung zur Festlegung der Lenkradwaage an der Karosse gelöst wird, ein spannungsfreier Zustand wiederhergestellt wird und nachfolgend zur weiteren Einstellung die Lenkradwaage durch die Abstütz- und Fixiereinrichtung wieder an der Karosse festgelegt wird.

10. Verfahren gemäß Anspruch 8, **dadurch gekennzeichnet, daß** die auf die Mittel zur lösbaren Befestigung der Lenkradwaage am Lenkrad cinwirkenden Kräfte und/oder die jeweils erforderliche Korrektur der Ausrichtung des Lenkrades auf Mitteln zum Anzeigen visualisiert werden.

11. Verfahren gemäß Anspruch 8, **dadurch gekennzeichnet daß** die auf die Mittel zur lösbaren Befestigung der Lenkradwaage am Lenkrad einwirkenden Kräfte und/oder die jeweils erforderliche Korrektur der Ausrichtung des Lenkrades an andere Systeme übertragen werden.

## Claims

1. Steering-wheel balance for measuring steering-wheel deviation from the horizontal, having means for releasably attaching the steering-wheel balance to the steering wheel in its symmetrical position, a variably adjustable support device for anchoring the steering-wheel balance against the vehicle body, an inclinometer for measuring the inclination relative to the horizontal, an evaluation unit and an indicator, **characterised in that** means (5) for the measurement of forces or torques acting between the steering-wheel balance (1) and the steering wheel are provided in the area of the means (2) for releasably attaching the steering-wheel balance (1) to the steering wheel.

2. Steering-wheel balance according to claim 1, **characterised in that** the means (5) for determining the forces acting on the means (2) for releasably attaching the steering-wheel balance (1) to the steering wheel are force-sensitive elements (5).

3. Steering-wheel balance according to claim 1 or claim 2, **characterised in that** means for determining the torque acting on the steering wheel are provided.

4. Steering-wheel balance according to claim 3, **characterised in that**, as means for determining the torque acting on the steering wheel, an evaluation unit is provided with which the torque acting on the steering wheel can be determined from the position of the means (5) for determining the forces acting on the means for releasably attaching the steering-wheel balance (1) to the steering wheel and the forces determined.

5. Steering-wheel balance according to claim 1, **characterised in that** the means (5) for determining the forces acting on the means (2) for releasably attaching the steering-wheel balance (1) to the steering wheel are torque-sensitive elements (5).

6. Steering-wheel balance according to claim 3, **characterised in that** means (4) for indicating the torque acting on the steering wheel are provided.

7. Steering-wheel balance according to claim 3, **characterised in that** the support device for anchoring the steering-wheel balance against the vehicle body includes means for comparing the actual value of the torque acting on the steering wheel with a specified torque value.

8. Method of adjusting the individual front toe angles of a vehicle such that, during straight-ahead driving, the steering wheel is aligned horizontally relative to its symmetrical position, a steering wheel balance being used which has, in the area of the means for releasably attaching the steering-wheel balance to the steering wheel, means for the measurement of forces or torques acting between the steering-wheel balance and the steering wheel, and a variably adjustable support and anchoring device for anchoring the steering-wheel balance against the vehicle body, and an inclinometer that measures deviation from the horizontal, this deviation being processed mathematically, via the steering wheel transmission ratio, in such manner with the individual front toe angles that these are output relative to a horizontal position of the steering wheel, and, after the steering-wheel balance has been anchored, the individual front toe angles being output relative to specified values for adjustment purposes, the individual front toe angles only being adjusted relative to the horizontal position if the torque acting between the steering wheel and the steering-wheel balance anchored to the body does not exceed a specified tolerance.

9. Method according to claim 8, **characterised in that**, in the event that the tolerance is exceeded, the support and anchoring device for anchoring the steering-wheel balance to the body is released, a stress-free condition is reinstated, and the steering-wheel balance is then re-anchored to the body with the support and anchoring device for further adjustment purposes.

10. Method according to claim 8, **characterised in that** the forces acting on the means for releasably attaching the steering-wheel balance to the steering wheel and/or the necessary correction to the steering-wheel alignment are indicated by visualizing them.

11. Method according to claim 8, **characterised in that** the forces acting on the means for releasably attaching the steering-wheel balance to the steering wheel and/or the necessary correction to the steering-wheel alignment are transmitted to other systems.

## Revendications

1. Balance de volant pour la mesure de l'écart du volant par rapport à l'horizontale, munie de moyens pour fixer de façon réversible la balance de volant sur le volant dans sa position de symétrie et munie d'un dispositif de support à réglage variable pour fixer la balance de volant sur la carrosserie du véhicule et comprenant un inclinomètre pour mesurer l'inclinaison par rapport à l'horizontale, d'un dispositif d'analyse et d'un dispositif d'affichage, **caractérisée en ce que** des moyens (5) pour mesurer des forces ou des couples entre la balance de volant (1) et le volant sont prévus dans la zone des moyens (2) pour fixer de façon réversible la balance de volant (1) sur le volant.

2. Balance de volant selon la revendication 1, **caractérisée en ce que** les moyens (5) pour mesurer les forces s'exerçant sur les moyens (2) pour fixer de façon réversible la balance de volant (1) sur le volant sont des éléments sensibles à une force (5).

3. Balance de volant selon la revendication 1 ou la revendication 2, **caractérisée en ce que** sont prévus des moyens pour mesurer le couple s'exerçant sur le volant.

4. Balance de volant selon la revendication 3, **caractérisée en ce qu'**une unité d'analyse est prévue en tant que moyens pour mesurer le couple s'exerçant sur le volant, à l'aide de laquelle le couple agissant sur le volant peut être déterminé à partir de la position des moyens (5) pour déterminer les forces s'exerçant sur les moyens pour fixer de façon réversible la balance de volant (1) sur le volant et à partir des forces déterminées.

5. Balance de volant selon la revendication 1, **caractérisée en ce que** les moyens (5) pour mesurer les forces s'exerçant sur les moyens (2) pour fixer de façon réversible la balance de volant (1) sur le volant sont des éléments sensibles aux couples.

6. Balance de volant selon la revendication 3, **caractérisée en ce que** des moyens (4) sont prévus pour afficher le couple s'exerçant sur le volant.

7. Balance de volant selon la revendication 3, **caractérisée en ce que** des moyens pour déterminer l'écart entre la valeur réelle et une valeur théorique du couple s'exerçant sur le volant sont prévus sur le dispositif de support pour fixer la balance de volant sur la carrosserie du véhicule.

8. Procédé de réglage de l'angle de pincement individuel de l'essieu avant d'un véhicule automobile ayant pour objectif que le volant présente une orientation horizontale par rapport à sa position de symétrie lors d'un avancement en ligne droite, une balance de volant étant utilisée, laquelle balance comprend des moyens disposés dans la zone des moyens pour fixer de façon réversible la balance de volant sur le volant et permettant de mesurer les forces ou couples entre la balance de volant et le volant, comprend un dispositif de support et de fixation à réglage variable pour fixer la balance de volant sur la carrosserie du véhicule, comprend un inclinomètre mesurant l'écart par rapport à l'horizontale et cet écart étant calculé avec les angles de pincement individuel de l'essieu avant et tenant compte du rapport de transmission du volant de sorte que lesdits angles sont affichés par rapport à une position horizontale du volant et les angles de pincement individuel de l'essieu avant étant affichés après la fixation de la balance de volant pour le réglage par rapport aux valeurs théoriques et le réglage des angles de pincement individuel par rapport à la position horizontale du volant n'étant exécuté que lorsque le couple entre la balance de volant fixée sur la carrosserie et le volant ne dépasse pas une valeur de tolérance définie.

9. Procédé selon la revendication 8, **caractérisé en ce que** lorsque la valeur de tolérance est dépassée, le dispositif de fixation et de support pour fixer la balance de volant sur la carrosserie est défait, un état exempt de contrainte est rétabli et la balance de volant est fixée à nouveau sur la carrosserie par le dispositif de support et de fixation afin d'effectuer par la suite un autre réglage.

10. Procédé selon la revendication 8, **caractérisé en ce que** les forces s'exerçant sur les moyens pour la fixation réversible de la balance de volant sur le volant et/ou la correction respectivement nécessaire de l'orientation du volant sont visualisées sur des moyens d'affichage.

11. Procédé selon la revendication 8, **caractérisé en ce que** les forces s'exerçant sur les moyens pour fixer de façon réversible la balance de volant sur le volant et/ou la correction respectivement nécessaire de l'orientation du volant sont transmises à d'autres systèmes.
